(19) Europäisches Patentamt / European Patent Office / Office européen des brevets

(11) EP 2 642 007 B1

(12) # EUROPEAN PATENT SPECIFICATION

(45) Date of publication and mention of the grant of the patent:
**24.10.2018 Bulletin 2018/43**

(21) Application number: **11850452.1**

(22) Date of filing: **21.12.2011**

(51) Int Cl.:
***D04H 1/40*** *(2012.01)* ***B29C 70/48*** *(2006.01)*
***B29B 11/16*** *(2006.01)* ***B26D 3/00*** *(2006.01)*
***B29K 307/04*** *(2006.01)* ***D04H 1/4242*** *(2012.01)*
***D04H 1/4274*** *(2012.01)*

(86) International application number:
**PCT/JP2011/079625**

(87) International publication number:
**WO 2012/086682 (28.06.2012 Gazette 2012/26)**

(54) **METHOD FOR PRODUCING CARBON FIBER AGGREGATE, AND METHOD FOR PRODUCING CARBON FIBER-REINFORCED PLASTIC**

VERFAHREN ZUR HERSTELLUNG EINES KOHLENSTOFFFASERAGGREGATS UND VERFAHREN ZUR HERSTELLUNG EINES KOHLENSTOFFFASERVERSTÄRKTEN KUNSTSTOFFS

PROCÉDÉ DE PRODUCTION D’UN AGRÉGAT DE FIBRES DE CARBONE ET PROCÉDÉ DE PRODUCTION D’UN PLASTIQUE RENFORCÉ PAR DES FIBRES DE CARBONE

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **24.12.2010 JP 2010287883**

(43) Date of publication of application:
**25.09.2013 Bulletin 2013/39**

(73) Proprietor: **Toray Industries, Inc.**
**Tokyo 103-8666 (JP)**

(72) Inventors:
- **HASHIMOTO, Takafumi**
  **Nagoya-shi**
  **Aichi 455-8502 (JP)**
- **NINOMIYA, Hiroki**
  **Iyo-gun**
  **Ehime 791-3193 (JP)**
- **WADAHARA, Eisuke**
  **Nagoya-shi**
  **Aichi 455-8502 (JP)**
- **YAMASAKI, Masaaki**
  **Nagoya-shi**
  **Aichi 455-8502 (JP)**

(74) Representative: **Hoefer & Partner Patentanwälte mbB**
**Pilgersheimer Straße 20**
**81543 München (DE)**

(56) References cited:
**DE-A1-102009 023 529** **GB-A- 2 012 671**
**JP-A- 6 285 889** **JP-A- 2004 137 425**
**JP-A- 2008 081 872** **JP-A- 2008 132 705**
**JP-U- 3 152 748** **JP-U- 3 152 748**
**US-A- 5 609 707** **US-A1- 2002 135 086**
**US-A1- 2009 309 260**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

EP 2 642 007 B1

## Description

### Technical Field of the Invention

The present invention relates to a technology for recycling a cut piece of the edge material of the carbon fiber base material, generated in a process for producing a carbon fiber-reinforced plastic (CFRP), into a carbon fiber aggregate and/or a carbon fiber-reinforced plastic. More concretely, the present invention relates to a method for producing a carbon fiber aggregate and a carbon fiber-reinforced plastic, for recycling the edge material of the carbon fiber base material into a CFRP having high mechanical properties.

### Background Art of the Invention

A fiber-reinforced plastic (FRP) comprising reinforcing fibers and a matrix resin is broadly employed as a material for producing a part applied for various uses such as airplanes, automobiles, ships, windmills or sporting goods, because it is excellent in mechanical properties, lightness in weight, corrosion resistance, etc. Although organic fibers such as aramide fibers or high-strength polyethylene fibers, and inorganic fibers such as carbon fibers, glass fibers or metal fibers are used as reinforcing fibers, for a use requiring high mechanical properties, carbon fibers are frequently employed. Since a carbon fiber-reinforced plastic (CFRP) using carbon fibers is excellent in strength, stiffness, lightness in weight and stability, it becomes one of main materials used in aerospace fields requiring high performances, and the use is expected to further increase in the future. Further, uses also for automobiles, windmills for wind power generation, etc. are expected to greatly increase in the future, and therefore, the amount of production of CFRP is expected to drastically increase in the future.

As a method for producing a CFRP, a process for using a so-called prepreg, which is prepared by being impregnated by a resin into carbon fibers in advance, is well known. In particular, in a so-called autoclave molding process wherein a thermosetting resin prepreg such as a so-called unidirectional prepreg prepared by being impregnated by a thermosetting resin into a sheet arranged with spread carbon fiber bundles in one direction, as needed, cut and laminated prepreg, is cured with the thermosetting resin in an autoclave under a high-temperature and high-pressure condition, a CFRP excellent in mechanical properties or thermal stability can be easily obtained, and the method is broadly employed in a use requiring high performances such as aerospace fields. However, in this autoclave molding process, although a CFRP with high performances is easily obtained, there are problems that a time required for molding is long and that a shape of CFRP is restricted. On the other hand, there is an RTM (Resin Transfer Molding) process as the other process for producing a CFRP. This is a process wherein a carbon fiber base material free from resin (for example, a base material such as a woven fabric) is placed in a mold, and thereafter, a resin is injected and cured. In this process, as compared with an autoclave molding process, because the shape fittability of CFRP can be widened, and further, because the time required for molding can be shortened, it is expected to be widely applied in the future for use in automobiles, in particular, in use for mass-produced automobiles.

In this RTM process, in the case where a CFRP having a 3D shape is produced, it is common to cut a carbon fiber base material at a predetermined pattern, to laminate and to place it in a mold. Because the above-described carbon fiber base material is usually produced as a continuous sheet with a constant width, edge materials are inevitably generated at the above-described cutting before molding. Depending upon the cut pattern of the carbon fiber base material, there is a case where the edge materials are generated at an amount of 30 to 70% of the carbon fiber base material. Since the development of use of CFRP in the future is expected as described above, a technology is required for recycling these edge materials generated in the production process of CFRP.

Because carbon fibers are high in chemical and thermal stabilities, however, it is difficult to employ a chemical recycle that recycles the carbon fibers as a raw material by dissolution, melting, decomposition and the like. Since carbon fibers contained in an edge material of carbon fiber base material become discontinuous fibers by cutting continuous fibers, they have a broad distribution from very long ones to very short ones in fiber length and carbon fibers are frequently restrained by a weave style, a textile structure or stitch yarns, and as the case may be, they are further welded more strongly by a binder or a tackifier (a form of particles or thermo-fusible yarns and the like), performance for recycle thereof is very poor, and it is difficult to recycle them to a carbon fiber base material itself. Therefore, although a method is considered wherein an edge material of a carbon fiber base material is cut and then compounded with a thermoplastic resin, and thereafter, the mixture is injection molded to produce a CFRP, in the case where such an edge material is cut and injection molded as it is, because carbon fibers are not sufficiently distributed into the thermoplastic resin or because a CFRP short in fiber length is produced if the mixing condition at the time of injection molding is intensified in order to sufficiently distribute the carbon fibers into the thermoplastic resin, in both cases, only a CFRP with low mechanical properties can be obtained.

As a method for recycling fibers other than carbon fibers, a method is disclosed in Patent document 1 wherein discontinuous fibers obtained from a used product comprising high-functional fibers such as fully aromatic polyamide fibers and new high-functional fibers are mixed and therefrom recycled high-functional spun yarns are obtained. However, this method supposes to recycle a product using high-functional spun yarns again to high-functional spun yarns, and it cannot be employed for recycle of a carbon fiber base material.

Further, in Patent documents 2 and 3, a recycling method is disclosed which comprises a cutting waste crushing step for crushing cutting wastes containing chemical fiber woven fabric or knit fabric and a curing agent impregnation step for impregnating a thermo-reactive curing agent into the crushed cutting wastes and wherein a molded material is formed by thermal-press molding of the cutting wastes impregnated with the curing agent. However, this method supposes a recycle of synthetic fibers such as polyester fibers, the mechanical properties of the molded product obtained are low, and it is not adaptable to recycle of a carbon fiber base material.

Moreover, a technology for recycling a CFRP by injection molding is known. For example, in Patent document 4, a method is disclosed wherein a carbon fiber-reinforced thermoplastic resin molded product is crushed to make pellets, and they are blended with virgin carbon fiber-reinforced thermoplastic resin pellets to be used for injection molding. However, this method is a method wherein a CFRP after injection molding is recycled by being injection molded with a matrix resin, and it is not adaptable to recycling of a carbon fiber base material that is before resin impregnation.

Except those, in Patent document 5, a recycling method is disclosed wherein a CFRP comprising carbon fibers and a thermosetting resin is heat treated to make a residual of carbon fibers by burning the thermosetting resin, and thereafter, the residual is compounded with a thermoplastic resin. However, in this method, even if such a residual of carbon fibers is compounded as it is, similarly to the above-described method for directly injection molding an edge material of a carbon fiber base material, the carbon fibers are left at a condition of being not satisfactorily distributed into the thermoplastic resin, or the fiber length of the carbon fibers becomes short, and therefore, a CFRP excellent in mechanical properties cannot be obtained. Patent document 6 discloses a method of making a non-woven fabric sheet for use as a substrate in a carbon-fibre-reinforced carbon composite. Carded staple fibre is placed transversely to continuous filament and needle punched to form a fabric.

Furthermore, it is attempted to make carbon fibers, which have been recovered by dissolving and removing an epoxy resin of a matrix resin from a CFRP, into a nonwoven fabric by carding (Non-patent document 1). In this method, originating from the dissolution and removal of the matrix resin, the yield at the time of making the nonwoven fabric is low, and the mechanical properties of a CFRP obtained, the mass productivity of the nonwoven fabric and the cost for processing are not satisfactory. Concretely, mainly the following points are causes. First, when the matrix resin is removed from the carbon fiber-reinforced plastic, although it is necessary to dip it in a chemical or a solvent and the like and pressurize and heat it, at that time, not only the matrix resin but also a sizing agent on the surfaces of carbon fibers are lost. The sizing agent has a function for enchancing the adhesive property between the carbon fibers and the matrix resin, even if a carbon fiber-reinforced plastic is made by using the above-described carbon fibers lost with the sizing agent, only low mechanical properties can be obtained. Further, the carbon fibers recovered by the above-described method are diverse in length, and very short carbon fibers and very long carbon fiber are included. The very short carbon fibers are not preferable, because such carbon fibers are easily sink on a cylinder roll or a worker roll in a carding process, and as a result, winding of carbon fibers onto the roll or to the contrary falling off from the roll can be occurred. Further, the very long carbon fibers are liable to tangle and reside in a carding machine at a lump condition. The residing carbon fibers are cut as time passes, and short carbon fibers are generated at a large amount. As a result, winding of carbon fibers to the roll or to the contrary falling off from the roll occurs, and such a state is not preferable. Further, in the above-described method, the recovered carbon fibers are in a fuzz ball tangled with the carbon fibers to each other, and until such fuzz ball becomes smaller by cutting of the recovered carbon fibers, it cannot pass through a clearance between respective rolls of the carding machine. Therefore, the length of the recovered carbon fibers contained in a finally obtained carbon fiber-reinforced plastic becomes shorter, and the mechanical properties become lower.

Namely, most of the recycle technologies of carbon fibers disclosed so far are technologies for recycling CFRP again to CFRP, the mechanical properties of a CFRP obtained are not satisfactory, and there has been no technologies so far wherein an edge material of a carbon fiber base material generated in a process for producing a CFRP is recycled to a CFRP with high mechanical properties or a carbon fiber aggregate used for production of the CFRP, while an excellent mass productivity is ensured.

Prior art documents

Patent documents

Patent document 1: JP-A-2005-105491
Patent document 2: JP-A-2009-66885
Patent document 3: JP-A-06-288084
Patent document 4: JP-A-2006-218793
Patent document 5: JP-A-2009-138143
Patent document 6: GB 2 012 671 A

Non-patent documents

Non-patent document 1: Hitachi Chemical Company, Ltd homepage "Ministry of Economy, Trade and Industry, regional new industry creation technology development assistant enterprise "epoxy CFRP recycle by normal pressure dissolution method"" http://www.hitachi-chem.co.jp/Japanese/csr/files/frp_recycling_technology_2.pdf

## Summary of the Invention

### Problems to be solved by the Invention

Accordingly, an object of the present invention is to provide a method according to claim 1 for producing a carbon fiber aggregate and a method according to claim 6 for producing a carbon fiber-reinforced plastic, for recycling an edge material of a carbon fiber base material generated in a CFRP production process into a CFRP having high mechanical properties.

### Means, for solving the Problems

To achieve the above-described object, methods for producing a carbon fiber aggregate and for producing a carbon fiber-reinforced plastic according to the present invention have the following constitutions. Namely, a method for producing a carbon fiber aggregate according to the present invention is characterized in that an edge material of a carbon fiber base material composed of carbon fibers is cut to obtain a cut piece, and the cut piece is made into a web and/or made into a nonwoven fabric to obtain a carbon fiber aggregate.

Further, a method for producing a carbon fiber-reinforced plastic according to the present invention is characterized in that a matrix resin is impregnated into a carbon fiber aggregate produced by the above-described method.

### Effect according to the Invention

In the method for producing a carbon fiber aggregate according to the present invention, after the cut pieces are obtained by cutting the edge materials of a carbon fiber base material before impregnation of a matrix resin, the cut pieces are made into a web and/or a nonwoven fabric (preferably, carded). In this carding step, the cut pieces are refined and the carbon fibers are oriented while it is suppressed that the carbon fibers become short in fiber length by breakage, and even if a binder or a tackifier is applied for the carbon fiber base material, a carbon fiber aggregate such as a web or a nonwoven fabric capable of being recycled into carbon fiber-reinforced plastics (CFRP) having various forms can be easily obtained. In particular, if thermoplastic resin fibers or glass fibers are added to the above-described cut pieces at the steps of carding, the mass productivity thereof can become higher, and the cost for production can be reduced more.

Further, in the above-described carbon fiber aggregate, because carbon fibers having a predetermined length are refined, the variation in areal weight of carbon fibers (CV value) is small, the critical shear deformation angle thereof is large, and the shape fittability into a complicated shape is excellent.

In the CFRP obtained by impregnating a matrix resin into the carbon fiber aggregate prepared by the above-described method, because carbon fibers having a predetermined length are refined, the moldability is good, and the mechanical properties are excellent. Such a carbon fiber aggregate can be impregnated with a matrix resin and molded by a resin transfer molding (RTM), a vacuum assisted resin transfer molding (VaRTM) or a reaction injection molding (RIM). Further, an injection molding or a press molding can also be employed after impregnation of the matrix resin, and the matrix resin can also be impregnated by press molding.

### Brief explanation of the drawings

[Fig. 1] Fig. 1 is a schematic diagram showing an embodiment of a carding step for making cut pieces of an edge material of a carbon fiber base material in the present invention.

[Fig. 2] Fig. 2 is a block diagram showing an embodiment of a process flow of a method for producing a carbon fiber aggregate and a method for producing a carbon fiber-reinforced plastic according to the present invention.

### Embodiments for carrying out the Invention

Hereinafter, the present invention will be explained in detail together with embodiments.

In a method for producing a carbon fiber aggregate according to the present invention, an edge material of a carbon fiber base material (such as a woven fabric, a multiaxial stitch fabric or a braid described later) composed of carbon fibers is cut to obtain a cut piece, and such a cut piece is made into a web and/or made into a nonwoven fabric (preferably, by carding) to obtain a carbon fiber aggregate.

As the carbon fibers in the present invention, although not particularly limited, PAN-base carbon fibers, pitch-base carbon fibers, cellulose-base carbon fibers, vapor grown-base carbon fibers and graphitized fibers thereof can be used. Where, PAN-base carbon fibers are carbon fibers the raw material of which is polyacrylonitrile fibers. Further, pitch-base carbon fibers are carbon fibers the raw material of which is petroleum tar or petroleum pitch. Further, cellulose-base carbon fibers are carbon fibers the raw material of which is viscose rayon, cellulose acetate, etc. Furthermore, vapor grown-base carbon fibers are carbon fibers the raw material of which is hydrocarbon, etc. Among these, from the viewpoint of excellent balance between strength and elastic modulus, PAN-base carbon fibers are preferable. Furthermore, metal coated carbon fibers, prepared by coating the above-described carbon fibers with a metal such as nickel or copper, can be used. The density of carbon fibers is preferably in a range of 1.65 to 1.95 g/$cm^3$, and more preferably in a range of 1.70 to 1.85 g/$cm^3$. If the density is too high, the lightness in weight of a carbon fiber-reinforced plastic obtained is poor, and if too low, there is a case where the mechanical properties of a carbon fiber-reinforced plastic obtained become low. Further, the size (diameter) of carbon fibers is preferably in a range of 5 to 8 μm per one fiber, and more preferably in a range of 6.5 to 7.5 μm. If the diameter is too small, there is a tendency that the amount of dust generated at a process for making a web and/or a process for making a nonwoven fabric (preferably, a carding process, increases or falling off from the process is liable to occur, and if too large, because of poor mechanical properties, there is a case where a satisfactory reinforcement effect cannot be obtained. Further, for the purpose of improving the adhesive properties between carbon fibers and a matrix resin and the like, the carbon fibers can be surface treated. As the method of the surface treatment, there are electrolytic treatment, ozone treatment, ultraviolet treatment, etc. Further, for the purpose of preventing the fuzz generation of carbon fibers, improving the adhesive property between carbon fibers and a matrix resin, and the like, a sizing agent can be provided to the carbon fibers. A urethane compound, an epoxy compound, etc. can be applied as the sizing agent.

The carbon fiber base material composed of carbon fibers indicated here comprises carbon fibers solely, or as needed, a combination with other inorganic fibers such as glass fibers or organic fibers. As its form, can be exemplified a unidirectional woven fabric in which fibers are arranged almost in a same direction and they are fixed with auxiliary yarns or binders, a bi-directional woven fabric in which at least carbon fibers are crossed in two directions, a multiaxial woven fabric in which they are crossed in multi directions, a multiaxial stitch fabric wherein sheets each prepared by arranging carbon fibers in one direction are laminated in multi directions and the laminate is bonded with stitch yarns, and other than those, a braid, a nonwoven fabric or a mat using discontinuous fibers, etc.

As the uni-directional woven fabric, for example, exemplified are a fabric wherein carbon fiber bundles are arranged in one direction in parallel to each other as warps and the warps and auxiliary wefts comprising, for example, glass fibers or organic fibers extending in one direction perpendicular to the warps are crossed to be woven, and a fabric having a so-called non-crimp structure which comprises warps comprising carbon fiber bundles, auxiliary warps of small yield fiber bundles comprising glass fibers or organic fibers arranged in parallel to the warps, and auxiliary wefts of small yield fiber bundles comprising glass fibers or organic fibers arranged perpendicularly to the warps and the auxiliary warps, and wherein the carbon fiber bundles are integrally held almost without being crimped to form a woven fabric, by a structure where the auxiliary warps and the auxiliary wefts are crossed to each other.

Further, in the present invention, not being limited to a uni-directional woven fabric, a bi-directional woven fabric using carbon fibers as warps and/or wefts can also be used. Such a bi-directional woven fabric is not particularly limited, and a plain weave fabric, a twill weave fabric, a satin weave fabric, a jacquard weave fabric, etc. can be used. In the present invention, as the woven fabric, a multiaxial woven fabric can be used. The multiaxial woven fabric is a woven fabric which is woven by using yarns provided from three or more directions so as to weave a bamboo basket, and typically, a three-axes woven fabric woven with yarns provided from three directions each shifted by 60 degrees in angle, a four-axes woven fabric woven with yarns provided from four directions each shifted by 45 degrees in angle, etc. can be exemplified.

Further, as the base material in the present invention, a multiaxial stitch fabric can be used. The multiaxial stitch fabric indicated here means a base material wherein reinforcing fiber bundles are arranged in one direction to make a sheet, a plurality of the sheets are laminated while changing the angles of the sheets, and a base material, prepared by stitching the laminate with a stitch yarn such as a nylon yarn, a polyester yarn or a glass fiber yarn so as to penetrate through the laminate in its thickness direction and so as to go back and forth between the surface and the back surface of the laminate and along the surface direction, is bonded by a stitch yarn. Except those, a braid prepared by arranging carbon fibers in a specified direction and interlacing them, a nonwoven fabric or a mat prepared by arranging discontinuous carbon fibers two-dimensionally or three-dimensionally and integrating them with auxiliary yarns or binders, etc. can be used.

In the present invention, the carbon fiber bundles forming a carbon fiber base material (such as the woven fabric) are disentangled and refined by the step for making a web described later. Therefore, the number of single fibers of carbon fibers in the carbon fiber bundles forming a carbon fiber base material does not greatly affect directly to the performance of a carbon fiber-reinforced plastic finally obtained. Accordingly, in the present invention, although the number of carbon fibers contained in the carbon fiber bundles forming the woven fabric is not particularly restricted, as long as they are carbon fiber bundles each comprising single fibers of carbon fibers in a range of 1,000 to 60,000 in number of fibers which is generally used for making the carbon fiber woven fabric, they can be used without problems.

In the carbon fiber base material used, fibers other than carbon fibers can be contained. Concretely, inorganic fibers such as glass fibers, metal fibers and ceramic fibers, and organic fibers such as polyamide fibers, polyester fibers and phenolic resin fibers, can be contained. As examples containing such inorganic fibers, wefts of a uni-directional woven fabric or a non-crimp woven fabric, auxiliary yarns for forming a resin flow path at the time of resin impregnation, etc. can be raised. Further, as examples containing such organic fibers, yarns for welding for preventing a broken alignment pattern of carbon fibers or stitch yarns for a multiaxial stitch fabric can be raised. However, if the content of these fibers other than carbon fibers is too much, because there is a case where the properties of a carbon fiber-reinforced plastic may be knocked down, or a case where the uses capable of being used are restricted, the content thereof in a carbon fiber base material is preferably not more than 10 wt.%, more preferably not more than 5 wt.%.

Further, for the carbon fiber base material to be used, a binder, a tackifier, particles for reinforcing interlayer, etc. can be applied at a discontinuous or particle shape. If a binder or a tackifier is applied for the carbon fiber base material, because the carbon fiber base material is fixed or stabilized in form more strongly, generally it becomes difficult to make it into a web. However, even if such a carbon fiber base material is used, by passing through a step preferred in the present invention wherein after cut pieces of an edge material of a carbon fiber base material (for example, cut pieces having a predetermined length or less in carbon fiber length) are obtained, preferably the cut pieces are refined by passing through a refining step described later, and the refined cut pieces are made into a web, effects due to the present invention can be exhibited. Namely, in case where a binder, etc. is applied, even in a case where it is desired that carbon fibers in a carbon fiber aggregate being obtained are almost uniformly refined nearly to a single fiber level, by passing through a refining step in the present invention described later wherein adequate-form cut pieces of a carbon fiber base material are refined, for example, it becomes possible to obtain a carbon fiber aggregate excellent in uniformity in which the coefficient of variation (CV value) in areal weight or thickness of carbon fibers is less than 10%. Therefore, to use a carbon fiber base material applied with such a binder or tackifier at a particle condition, and further to pass through the refining step described later, is a preferred embodiment in the present invention for exhibiting the effect due to the present invention as much as possible.

On the other hand, in the case where a form is desired wherein carbon fibers in a carbon fiber aggregate are not uniformly refined nearly to a single fiber level and a form of a carbon fiber bundle is partially left, to the contrary, if a carbon fiber base material applied with a binder or a tackifier is used, because the carbon fiber bundle is fixed or stabilized in form more strongly than that in a usual carbon fiber base material, the form of the carbon fiber bundle can be partially left easily.

Further, as the above-described particles, particles can be exemplified which are comprised by using a resin solely or using a compound of resins such as a polyamide, a polyolefin, a polyester (including an unsaturated polyester), a polyvinyl formide, a polyether sulfone, a polyphenylene sulfide, a vinyl acetate, a vinyl ester, an epoxy, and a phenol. Although the content of such particles is not particularly restricted, because, depending upon the combination of a resin forming the particles and a matrix resin for making the carbon fiber-reinforced plastic, there is a case where the properties of a carbon fiber-reinforced plastic finally obtained may be lowered or where the uses thereof capable of being used are limited, the content in the carbon fiber base material is preferably 25 wt.% or less, more preferably 10 wt.% or less, and further preferably 5 wt.% or less.

The method for producing a carbon fiber aggregate according to the present invention includes a step for obtaining a cut piece by cutting an edge material of a carbon fiber base material composed of carbon fibers, and a step for obtaining a carbon fiber aggregate by making such a cut piece into a web and/or made into a nonwoven fabric. The method for producing a carbon fiber-reinforced plastic according to the present invention further includes a step for impregnating a matrix resin into such a carbon fiber aggregate. Carding is applied for making the web and/or nonwoven fabric.

By cutting an edge material of a carbon fiber base material to obtain a cut piece, in the step for making a web described later, for example, in the case of using carding, the control of the feeding amount of carbon fibers to be fed into the machine can be facilitated, and the quality of a carbon fiber aggregate to be obtained can be stabilized. Further, an important objective of such a cutting is to control the length of carbon fibers at a predetermined length or less. If carbon fibers which are too long in fiber length are contained, because the carbon fibers may be wound onto a roll in the carding machine in the carding step or the moldability may be spoiled when a carbon fiber-reinforced plastic is molded, and such a condition is not preferred. The inventors of the present invention have found to be able to solve the above-described problems by cutting a carbon fiber base material composed of carbon fibers in advance to control the length of the carbon fibers at a predetermined length or less, thereby reaching the present invention. In the present invention, the method for cutting carbon fibers is not particularly restricted, a method such as a rotary cutter or a Guillotine cutter, punching by a Thomson cutter mold, a ultrasonic cutter can be applied. In particular, as a method for obtaining the cut piece at a high productivity, punching by a Thomson cutter mold is preferred.

Further, it is preferred to perform the step for refining the cut piece in advance, prior to making a web. In particular, in the case where a binder or a tackifier is applied for a carbon fiber base material as aforementioned, by refining the cut piece in advance, making a web or a nonwoven fabric in the present invention is facilitated. Further, by performing the refining step in advance, in the carding step or the punching step described later, it can be performed more easily to arrange the direction of the fibers or to refine the fibers. Means for refining the cut piece in advance is not particularly restricted, and a refining machine or an opening machine using a cutter, a large nail, a saw blade, various kinds of wires, etc. such as a flat carding machine or a roller carding machine can be used. In particular, in the case where a binder or a tackifier is applied for a carbon fiber base material, because carbon fiber bundles are fixed or stabilized in form more strongly than those in a usual carbon fiber base material, it is further preferred to pass the base material through the refining machine several times and to refine it sufficiently.

The carding in the present invention means an operation for arranging the direction of discontinuous fibers or refining fibers by applying a force in an approximately same direction to an aggregate of discontinuous fibers with a comb-like member. Generally, it is performed using a carding machine equipped with a roll having many needle-like projections on the surface and/or a roll wound with a metallic wire having saw blade-like projections.

When such a carding is carried out, it is preferred to control the time (residing time), during which carbon fibers reside in the carding machine, to be short, for the objective of preventing the carbon fibers from being folded. Concretely, it is preferred to transfer the carbon fibers existing on the wires wound onto a cylinder roll of the carding machine (the structure of the machine will be exemplified later) to a doffer roll in a time as short as possible. Therefore, in order to accelerate such a transfer, it is preferred to rotate the cylinder roll at a high rotational speed, for example, such as 300 rpm or higher. Further, from a similar reason, the surface speed of the doffer roll is preferably a high speed, for example, such as 10 m/min. or higher. Further, similarly, it is important to widen a clearance between respective rolls as compared with that in the carding of usual organic fibers, in order to prevent carbon fibers from sinking on the surfaces of the cylinder roll, worker rolls, stripper rolls, etc. by being pressed thereto. For example, the respective clearances between rolls of the cylinder roll, worker rolls and stripper rolls are set preferably at 0.5 mm or more, more preferably 0.7 mm or more, and further preferably 0.9 mm or more.

Further, the carbon fiber aggregate indicated here means an aggregate which is kept in form by tangle or friction of fibers to each other at a condition where discontinuous fibers are refined and oriented by the above-described carding, and exemplified are a thin sheet-like web, a rope-like sliver obtained by twisting and/or stretching a web, a nonwoven fabric obtained by laminating webs, as needed, by tangle or adhesion, etc.

Fig. 1 is a schematic diagram showing an embodiment of a carding step for making cut pieces of an edge material from a carbon fiber base material. A carding machine 1 shown in Fig. 1 mainly comprises a cylinder roll 2, a take-in roll 3 provided closely to the outer circumferential surface of the cylinder roll 2, a doffer roll 4 provided closely to the outer circumferential surface of the cylinder roll 2 at a side opposite to the side of the take-in roll 3, a plurality of worker rolls 5 provided closely to the outer circumferential surface of the cylinder roll 2 between the take-in roll 3 and the doffer roll 4, stripper rolls 6 provided closely to the worker rolls 5, and a feed roll 7 provided closely to the take-in roll 3 and a belt conveyer 8.

Cut pieces 9 of an edge material of a carbon fiber base material are supplied to belt conveyer 8, and the cut pieces 9 are provided onto the outer circumferential surface of cylinder roll 2 through the outer circumferential surface of feed roll 7 and then through the outer circumferential surface of take-in roll 3. Up to this stage, cut pieces 9 are disentangled and become cotton-like carbon fibers at a condition where the form of the edge material of the carbon fiber base material is not kept. Although a part of the cotton-like carbon fibers provided onto the outer circumferential surface of cylinder roll 2 wind around the outer circumferential surface of worker rolls 5, these carbon fibers are stripped off by stripper rolls 6 and returned again onto the outer circumferential surface of the cylinder roll 2. Many needles, projections exist at standing conditions on the outer circumferential surfaces of the respective rolls of feed roll 7, take-in roll 3, cylinder roll 2, worker rolls 5 and stripper rolls 6, and in the above-described steps, by the operation of the needles, carbon fibers are refined into a single-fiber condition and at the same time the directions thereof are arranged. The carbon fibers, refined and promoted in fiber orientation through such steps, move onto the outer circumferential surface of doffer roll 4 as a sheet-like web 10 which is one form of a carbon fiber aggregate. Further, by drawing the web 10 while narrowing the width thereof, a fibrous sliver, which is another form of a carbon fiber aggregate, can be obtained.

In the present invention, although the carbon fiber aggregate can be formed by only carbon fibers, thermoplastic resin fibers or glass fibers can also be contained. In particular, it is preferred to add thermoplastic resin fibers or glass fibers when cut pieces are carded, because not only breakage of carbon fibers at the carding can be prevented but also the amount of the output can be increased. Because carbon fibers are rigid and fragile, they are hard to be tangled and liable to be broken. Therefore, there is a problem in the carbon fiber aggregate formed by only carbon fibers that during the production, it is easily cut or carbon fibers are liable to be fallen off. Accordingly, by containing thermoplastic resin fibers or glass fibers which are relatively flexible and hard to be broken and liable to be tangled, a carbon fiber aggregate high in uniformity can be formed. In the present invention, in the case where thermoplastic resin fibers or glass fibers are contained in a carbon fiber aggregate, the content of carbon fibers in the carbon fiber aggregate is preferably in a range of 20 to 95 mass%, more preferably in a range of 50 to 95 mass%, and further preferably in a range of 70 to 95 mass%. If the content of carbon fibers is low, it becomes difficult to obtain high mechanical properties when a carbon fiber-reinforced plastic is made, and to the contrary, if the content of thermoplastic resin fibers or glass fibers is too low, an advantage for improving the above-described uniformity of the carbon fiber aggregate cannot be obtained.

In the present invention, in the case where thermoplastic resin fibers or glass fibers are contained in a carbon fiber aggregate, the fiber length of the contained fibers is not particularly limited as long as it is in a range capable of achieving the objective of the present invention such as keeping the form of the carbon fiber aggregate or preventing falling off of carbon fibers, and generally, thermoplastic resin fibers or glass fibers having a length of approximately 10 to 100 mm can be used. Where, it is also possible to decide the fiber length of thermoplastic resin fibers relatively in accordance with the fiber length of carbon fibers. For example, when a carbon fiber aggregate is stretched, because a stronger tension is applied to a fiber longer in fiber length, in the case where it is desired to orient carbon fibers in the lengthwise direction of the carbon fiber aggregate by applying a tension to the carbon fibers, the fiber length of the carbon fibers can be set longer than the fiber length of thermoplastic resin fibers or glass fibers, and in a contrary case, the fiber length of the carbon fibers can be set shorter than the fiber length of thermoplastic resin fibers or glass fibers.

Further, it is preferred to provide a crimp to the above-described thermoplastic resin fibers for the objective of enhancing the effect of tangle due to the thermoplastic resin fibers. The degree of the crimp is not particularly limited as long as it is in a range capable of achieving the objective of the present invention, and generally, thermoplastic resin fibers having a number of crimp in a range of approximately 5 to 25 crests per 25 mm and a rate of crimp in a range of approximately 3 to 30% can be used.

The material for such thermoplastic resin fibers is not particularly restricted, and it can be appropriately selected from a range that does not greatly reduce the mechanical properties of a carbon fiber-reinforced plastic. Concretely, fibers can be used which are prepared by spinning a resin such as a polyolefin-group resin such as polyethylene or polypropylene, a polyamide-group resin such as nylon 6 or nylon 6,6, a polyester-group resin such as polyethylene terephthalate or polybutylene terephthalate, a polyetherketone, a polyketone, a polyetheretherketone, a polyphenylene sulfide, an aromatic polyamide or a phenoxy. It is preferred that such a material for thermoplastic resin fibers is appropriately selected in accordance with the combination with a matrix resin to be impregnated into a carbon fiber aggregate. Further, it is preferred to especially employ fibers using a recycled thermoplastic resin as the thermoplastic resin fibers, from the viewpoint of improvement of recycling property that is one of the subject matters of the present invention.

As the thermoplastic resin fibers, in particular, thermoplastic resin fibers prepared using the same resin as a matrix resin, a resin having a compatibility with a matrix resin or a resin having a high adhesive property with a matrix resin are preferred, because the mechanical properties of a carbon fiber-reinforced plastic are not lowered. For example, the thermoplastic resin fibers are preferred to be composed of at least one kind of fibers selected from the group consisting of polyamide fibers, polyester fibers, polyphenylene sulfide fibers, polypropylene fibers, polyetheretherketone fibers and phenoxy resin fibers.

In the present invention, when a matrix resin is impregnated into a carbon fiber aggregate, a method may be employed wherein a carbon fiber aggregate containing thermoplastic resin fibers is prepared and the thermoplastic resin fibers contained in the carbon fiber aggregate are used as the matrix resin as they are, or a method can also be employed wherein a carbon fiber aggregate not containing thermoplastic resin fibers is used as a raw material, and a matrix resin is impregnated at an arbitrary stage for producing a carbon fiber-reinforced plastic. Further, even in the case where a carbon fiber aggregate containing thermoplastic resin fibers is used as a raw material, a matrix resin can be impregnated at an arbitrary stage for producing a carbon fiber-reinforced plastic. In such a case, a resin forming thermoplastic resin fibers and a matrix resin can be an identical resin, and can be resins different from each other. In the case where the resin forming thermoplastic resin fibers and the matrix resin are different from each other, both resins can be thermoplastic resins, and can also be a combination of a thermoplastic resin and a thermosetting resin. However, in the case where the resin forming thermoplastic resin fibers and the matrix resin are different from each other, it is preferred that both resins have a compatibility or a high affinity, for example, the solubility parameters (SP value) defined in the following equation 1 are preferably close to each other, because the mechanical properties of FRP become high.

[Equation 1]

$$\delta=\sqrt{(\Delta E/V)} \qquad \text{(equation 1)}$$

Where, $\Delta E$ is an evaporating energy, and V is a molar volume.

On the other hand, in the case where thermoplastic resin fibers are used, for example, in the case where a reduction of the carbon fiber-reinforced plastic properties is observed at an environmental test (an environmental test such as a heat cycle between a high temperature and a low temperature) or a reduction of mechanical properties after the environmental test, it is preferred to use glass fibers which are inorganic fibers, instead of a part of or the whole of the thermoplastic resin fibers. As the glass fibers, although various glass fibers such as E-glass, S-glass or T-glass fibers can be used, in particular, it is preferred to employ recycled glass fibers, from the viewpoint of improvement of recycling property that is one of the subject matters of the present invention.

As the form of the carbon fiber aggregate obtained by the above-described method, a web or a nonwoven fabric is preferred from the viewpoint of the suitability for wide use and mass production, and the cost for production. Except those, it can be processed into a desired form in accordance with the objectives. For example, spun yarns can be made by stretching and twisting a sliver, which is one form of a carbon fiber aggregate according to the present invention, using a spinning frame, etc. For example, spun yarns can be obtained by passing through a drawing step for orienting the fibers while reducing the unevenness of the thicknesses of slivers by gathering a plurality of slivers and stretching them, a roving step for making so-called rovings by orienting the fibers by twisting the slivers while stretching them to increase the strength of the spun yarns, and a fine spinning step for twisting the spun yarns while further stretching the spun yarns to increase the strength as well as making spun yarns with a predetermined thickness. In such a processing, for example, in the fine spinning step, a machine such as a ring spinning frame, a compact spinning frame or an open-end spinning frame can be used. The spun yarns thus prepared, containing discontinuous inorganic fibers, can be made into a CFRP, for example, after being made into a woven fabric. As the woven fabric, a general woven fabric such as a plain weave fabric, a twill weave fabric or a satin weave fabric, a three-dimensional woven fabric, a multiaxial stitch fabric, a uni-directional woven fabric, etc. can be employed.

The variation in areal weight or variation in thickness of carbon fibers (CV value) in a carbon fiber aggregate is preferably less than 10%. If the CV value is 10% or more, the weight or thickness of a CFRP varies locally, and the appearance and the like may be damaged. Further, if the CV value is 10% or more, when a carbon fiber composite is made, in the case where a matrix resin impregnated by infusion moldings, concretely, by resin transfer molding (RTM), vacuum assisted resin transfer molding (VaRTM) or reaction injection molding (RIM), there is a case where the matrix resin locally flows preferentially through a portion small in areal weight (or thickness) and a uniform impregnation cannot be achieved, and as a result, the matrix resin cannot be spread over the entire surface or voids are generated in a CFRP and the mechanical properties are remarkably damaged, and such a condition is not preferred. A carbon fiber aggregate having a variation in areal weight or a variation in thickness in the above-described range can be easily obtained by passing through a cutting step for cutting an edge material of a carbon fiber base material, a refining step for refining the cut piece and a carding step for making the refined cut piece into a web or a nonwoven fabric.

It is preferred that the critical shear deformation angle of a carbon fiber aggregate is 30 degrees or more. This critical shear deformation angle is one of indexes of shape traceability into a complicated shape, and in the present invention, it is determined as follows. A carbon fiber aggregate having a critical shear deformation angle in the above-described range can be easily obtained, similarly, by passing through the above-described cutting step, refining step, and carding and/or punching step.

A jig is prepared wherein frames are disposed so as to form a rectangle or a lozenge and each vertex is fixed by a pin and which is movable in a diagonal direction, and a carbon fiber base material is cut out as a rectangular test piece along the size of the jig. The cut-out test piece is set so that sides of the test piece and the sides of the jig become parallel to each other (refer to Fig. 4 of JP-A-2007-162185 as to the outline of the jig and the attachment condition of the test piece. Where, the frames can clamp the test piece.). By deforming the frames into a lozenge by applying a tensile load thereto, a shear load is transmitted to the test piece of the carbon fiber base material. While applying a shear load until wrinkles are generated in the plane of this test piece at a portion apart from the clamp part or a free end part at least by 1 cm or more, a curve in relation to a loaded tensile load and a change in angle when the jig is deformed to a lozenge is obtained. In this curve, a point at which a great inflection point is generated, or an angle at which the above-described wrinkles are generated, is defined as a critical shear deformation angle. If the critical shear deformation angle of a carbon fiber aggregate is less than 30 degrees, in the case of being formed into a complicated form, there is a case where the carbon fiber aggregate generates wrinkles, an unevenness is formed on a surface of a CFRP or a CFRP having a predetermined shape cannot be obtained, and such a condition is not preferred.

In the present invention, as a matrix resin used for production of a CFRP, a thermosetting resin is preferred from the viewpoint of the moldability and the mechanical properties. As the thermosetting resin, at least one resin selected from an epoxy, a phenol, a vinyl ester, an unsaturated polyester, cyanate ester and a bismaleimide is preferably used. Further, a resin added with an elastomer, a rubber, a curing agent, a curing accelerator, a catalyst, etc. can also be used. Among those, in order to achieve very high mechanical properties required for a structural member of a transportation device such as an airplane or an automobile, an epoxy resin, and in order to achieve a high thermal resistance, a bismaleimide resin, are preferred, and in particular, an epoxy resin is preferably used.

Where, as the matrix resin, thermoplastic resins can also be used, for example, such as a polyolefin, an ABS, a polyamide, a polyester, a polyphenylene ether, a polyacetal, a polycarbonate, a polyphenylene sulfide, a polyimide, a polyetherimide, a polyether sulfone, a polyketone, a polyetheretherketone, a polyetherketoneketone, and a combination thereof. Further, a thermoplastic resin precursor such as a polyamide for RIM, a cyclic polybutylene terephthalate and a polycarbonate can also be used.

In the present invention, when a matrix resin is impregnated into a carbon fiber aggregate as described above, the matrix resin can be impregnated after the carbon fiber aggregate is processed into a woven fabric and the like, and the matrix resin can be impregnated directly into the carbon fiber aggregate produced by carding.

In the case where the resin is impregnated after a woven fabric is made from a carbon fiber aggregate, a method can be employed wherein a matrix resin is impregnated into a woven fabric made from spun yarns exemplified above by a known method. For example, a carbon fiber-reinforced plastic can be made by a molding method wherein a prepreg or a semipreg is prepared by impregnating a matrix resin, and thereafter it is heated and cured while being pressurized in an autoclave.

Further, as a more preferable molding method in the present invention, infusion molding methods can be exemplified such as a resin transfer molding (RTM), resin film infusion (RFI), reaction injection molding (RIM) or vacuum assisted resin transfer molding (VaRTM), which is high in productivity. Among those, from the viewpoint of cost for molding, an RTM and a vacuum assisted resin transfer molding are preferably employed. As the RTM, for example, there is a molding method for injecting a pressurized resin into a cavity formed by a male mold and a female mold, and preferably, the resin is injected after the cavity is reduced in pressure. Further, as the vacuum assisted resin transfer molding, for example, there is a molding method for reducing in pressure a cavity formed by one of a male mold and a female mold, and a bag material such as a film (for example, a bag material such as a nylon film or a silicone rubber), and infusing a resin by a pressure difference with an atmospheric pressure, and preferably, a resin distribution medium is placed on a preform in the cavity to accelerate the resin impregnation, and after the molding, the medium is separated from the composite material. In the case where the above-described method is employed, the matrix resin is preferably a thermosetting resin or a thermoplastic resin precursor.

Further, in such an infusion molding, it is preferred to impregnate a matrix resin into a laminate as the preform which is prepared by laminating a carbon fiber aggregate and a carbon fiber base material different from the carbon fiber aggregate in an approximate sandwich form so that the carbon fiber aggregate becomes a core of the sandwich. As a simplest concrete example, raised is a lamination structure of "a carbon fiber base material different from a carbon fiber aggregate/a carbon fiber aggregate/ a carbon fiber base material different from a carbon fiber aggregate". If the preform is formed at a lamination structure of such an approximate sandwich form, the carbon fiber base material excellent in mechanical properties functions as a skin layer, and the mechanical properties as a carbon fiber-reinforced plastic can be exhibited more highly. Further, also as its appearance, a design property of the carbon fiber base material can be expressed, and therefore, it is a preferable embodiment in the present invention. Of course, a lamination structure such as "a carbon fiber base material different from a carbon fiber aggregate/a carbon fiber aggregate/ a carbon fiber aggregate/ a carbon fiber base material different from a carbon fiber aggregate" or "a carbon fiber base material different from a carbon fiber aggregate/a carbon fiber aggregate/ a carbon fiber base material different from a carbon fiber aggregate/ a carbon fiber aggregate/ a carbon fiber base material different from a carbon fiber aggregate" is included in the above-described lamination structure of an approximate sandwich form. Where, it is not always necessary that the outermost surface of a preform is formed by a carbon fiber base material different from a carbon fiber aggregate, and depending upon the use, a glass fiber mat or a carbon fiber mat, or a carbon fiber aggregate according to the present invention, may be disposed.

Further, in the present invention, the number average fiber length of carbon fibers contained in the carbon fiber aggregate is preferably in a range of 5 to 100 mm, more preferably in a range of 10 to 90 mm, and further preferably in a range of 20 to 70 mm. In the case where the number average fiber length of carbon fibers is shorter than 5 mm, it is not preferred because the mechanical properties of a carbon fiber-reinforced plastic obtained by impregnating a matrix resin into the carbon fiber aggregate become low. To the contrary, if the number average fiber length of carbon fibers exceeds 100 mm, because the carbon fibers are hard to move when a carbon fiber-reinforced plastic is molded, a range of shape capable of being molded becomes narrow, and such a condition is not preferred.

Further, in the present invention, the number average fiber length of carbon fibers contained in the cut piece is preferably in a range of 25 to 100 mm, more preferably in a range of 40 to 80 mm. By controlling the number average fiber length of carbon fibers in the cut piece in such a range, it becomes possible to control the number average fiber length of carbon fibers contained in a carbon fiber aggregate prepared by carding in a range of 5 to 100 mm, preferably in a range of 10 to 90 mm, and more preferably in a range of 20 to 70 mm. Further, If the number average fiber length of carbon fibers in the cut piece is shorter than 25 mm, the carbon fibers are liable to sink on a cylinder roll or worker rolls at a carding step, and as a result, winding of the carbon fibers onto the roll or to the contrary, falling off thereof from the roll, is liable to occur, and such a condition is not preferred. Further, if the number average fiber length of carbon fibers in the cut carbon fiber base material is longer than 100 mm, the carbon fibers are liable to be tangled and liable to become a lump and stay in a carding machine. The stayed carbon fibers are cut as time passes and a lot of carbon fibers having a short fiber length are generated. As a result, winding of the carbon fibers onto a roll or to the contrary, falling off thereof from the roll, occurs, and such a state is not preferred.

Further, in the present invention, in case where a carbon fiber bundle is cut to obtain cut pieces, it is preferred that the carbon fiber bundle before cutting is being spread. By the condition of being spread with the carbon fiber bundle, because it is liable to be caught by projections on the surfaces of a cylinder roll and worker rolls, it becomes hard to sink on the surfaces of those rolls, and as a result, winding of carbon fibers onto a roll or to the contrary, falling off thereof from the roll, hardly occurs, and such a state is preferred.

The above-described state where the carbon fiber bundle is being spread before being cut can be realized, for example, by using a carbon fiber base material using spread carbon fibers, in particular, by using a carbon fiber woven fabric after cutting. As such a woven fabric using spread carbon fibers, it is not particularly restricted as long as carbon fibers are spread, can be used a unidirectional woven fabric, a multiaxial woven fabric, a multiaxial stitch fabric, etc. As such woven fabrics, although woven fabrics described in JP-A-2003-268669, JP-A-2001-164441, JP-A-8-337960, etc. can be exemplified, except those, can be used woven fabrics applied with a usually known carbon fiber spreading method, namely, such as a method for squeezing a fiber bundle by a round bar, a method for spreading respective fibers by applying water flow or high-pressure air flow, a method for spreading respective fibers by vibrating the fibers by ultrasonic waves, or an air spreading method.

Further, in the present invention, when a carbon fiber-reinforced plastic is prepared by impregnating a matrix resin into a carbon fiber aggregate, without making the carbon fiber aggregate into a woven fabric, a carbon fiber-reinforced plastic can be prepared directly by the following exemplified method.

For example, a sliver, which is one form of a carbon fiber aggregate, can be injection molded by using an injection molding machine. In this case, a matrix resin is impregnated into a sliver in the injection molding machine, then, injected into a mold, and further, by consolidating the matrix resin, a carbon fiber-reinforced plastic can be obtained. As the injection molding machine, a machine such as an in-line screw type or a screw preplasticating type can be used. Further, it can also be done to add resin pellets, a stabilizer, a flame retarder, a colorant, etc. to a sliver and supply it to the injection molding machine to make molded products. When the sliver is fed into an injection molding machine, it can also be performed to feed the sliver, after increasing the apparent density of the sliver or extinguishing hitching due to fuzz and thereafter twisting or stretching the sliver.

In the case where a carbon fiber-reinforced plastic is produced by injection molding as described above, it is preferred that the number average fiber length of carbon fibers contained in the carbon fiber-reinforced plastic obtained by the injection molding is 0.2 mm or more. In case where the number average fiber length of carbon fibers is shorter than 0.2 mm, because the mechanical properties of the carbon fiber-reinforced plastic obtained become lower and such a condition is not preferred. To the contrary, in case where the above-described number average fiber length of carbon fibers exceeds 25 mm, the flowability of a resin easily deteriorates, and a molded product having a desired shape may not be obtained or the flatness of the surface of the molded product may be spoiled, and such a condition is not preferred.

Further, in the case of a web or a nonwoven fabric which is one form of the carbon fiber aggregate according to the present invention, for example, a carbon fiber-reinforced plastic can be obtained by impregnating a matrix resin in advance as in a prepreg and thereafter press molding it. Except for the above case, a carbon fiber-reinforced plastic can also be obtained, not by impregnating a matrix resin in advance, but by making a matrix resin into a form of a film or the like, laminating it with a web or a nonwoven fabric which is a carbon fiber aggregate, and impregnating the matrix resin by press molding. Here, because the process for impregnating a matrix resin by press molding is less in number of steps, it is considered to be more advantageous from the viewpoint of cost down. Where, although generally there is a case where a distinction between a web and a nonwoven fabric is not clear, in the present invention, a sheet, obtained by a carding step in a condition where carbon fibers are refined and oriented but a processing for tangle, adhesion, etc. of fibers to each other described later is not performed, is called as a web, and a sheet performed with the processing for tangle, adhesion, etc. of fibers to each other is called as a nonwoven fabric.

Such a web is not particularly restricted as long as features of the present invention are satisfied, and it is preferably a web obtained by carding cut pieces. Although a web generally has a relatively low areal weight in a range of ten-odd to several tens g/m$^2$ at a condition where it has come out from a carding machine as it is, it can be impregnated with a matrix resin as it is, and a matrix resin can also be impregnated with a matrix resin after the web is laminated until a desired areal weight is achieved, as the case may be, after it is entangled by passing through a punching step. For laminating the web, a known method can be employed, the web cut at a predetermined size in a sheet-form can be laminated, and the web can also be continuously laminated using an apparatus such as a cross-wrapper. Further, by performing a processing for tangling or adhering fibers forming such a web to each other, a nonwoven fabric improved with the stability in form can be obtained. By making such a nonwoven fabric, because occurrence of elongation and wrinkles at a production process can be reduced, the variation in properties of a carbon fiber-reinforced plastic can be reduced.

Further, as a method for making carbon fibers adhere to each other, adhesion using a binder can be raised, and as the binder, a polyamide, a polyolefin, a polyester, a PVA, an acryl, a vinyl acetate, a polyurethane, an epoxy, an unsaturated polyester, a vinyl ester, a phenol, etc. can be exemplified. By carding after such a binder is made into fibers or powder and mixed with carbon fibers, a web containing the binder is prepared, and by heating and/or pressing the web, carbon fibers can be adhered to each other. Alternatively, carbon fibers can be adhered to each other by providing a binder after making a web and thereafter heating and/or pressing the web. As a method for providing a binder, a method for applying powder-like or particle-like binder directly onto a web, a method for sprinkling a solution, a dispersion or an emulsion of binder, whose medium is water, alcohol, etc., onto a web, or a method for dipping a web in a solution, a dispersion or an emulsion of binder, as needed, squeezing the liquid, and thereafter, removing the medium by drying, can be employed. As a heating method for making a binder adhere, a method for blowing hot air to a web, a method for blowing hot air from a direction of either the surface or the back surface of a web and further passing the air through the web to the opposite side (air through method), a method for heating a web by a heater, a method for heating a web by bringing the web into contact with a high-temperature roll and the like, etc. can be employed. Further, for the purpose of enhancing the adhesion force of carbon fibers to each other or the efficiency of the heating, it can also be done to press the web before or after the above-described step of heating, or at the same time as the heating. As such a pressing method, can be used a usual press machine performing the pressing by nipping the web with flat plates, a calender roll performing the pressing by nipping the web with a pair of rolls, etc.

Further, by drawing such a web or a nonwoven fabric in a desired direction, the orientation of carbon fibers can be changed. The orientation of carbon fibers greatly influences the mechanical properties and the flowability of a carbon fiber-reinforced plastic. For example, in the direction of the orientation of carbon fibers, although the strength and the elastic modulus of the carbon fiber-reinforced plastic are high, the flowability is low. In a web or a nonwoven fabric in the present invention, the rate of carbon fibers directed in a specified direction is high, and the carbon fibers are in a condition of being oriented. Therefore, although it exhibits a so-called anisotropy, by drawing such a web or a nonwoven fabric, the anisotropy can be further enhanced, or a so-called isotropy can be enhanced by relieving the anisotropy.

The impregnation of a matrix resin into the above-described web or nonwoven fabric is not particularly restricted, and a known method exemplified as follows can be used. For example, it is possible to form a matrix resin as a sheet such as a film or a nonwoven fabric, laminate such a sheet with a carbon fiber web or a carbon fiber nonwoven fabric and thereafter melt the matrix resin, thereby impregnating the matrix resin, as needed, by pressing. As a machine for producing a stampable sheet by such a method, a known machine such as a double belt pressing machine or an intermittent pressing machine can be used.

Further, in the present invention, a carbon fiber-reinforced plastic can also be made by cutting a sliver, which is one form of a carbon fiber aggregate, at an appropriate size and charging the cut sliver into a mold cavity for press molding to use it as a material for press molding. In the case of press molding, it can also be done to add a resin, a stabilizer, a flame retardant, a colorant, etc. and to mold together. In such a case, when the sliver is press molded in a mold, they can be added into the carbon fiber-reinforced plastic by making them in a fibrous form and mixing with the sliver or by making them in a sheet-like form, such as film or nonwoven, and laminating with the sliver.

In the present invention, the number average fiber length of carbon fibers contained in a carbon fiber-reinforced plastic obtained by press molding is preferably 3 mm or more. If the above-described number average fiber length of carbon fibers is shorter, because the mechanical properties of the carbon fiber-reinforced plastic become lower, such a condition is not preferred. In the present invention, in order to make the number average fiber length of carbon fibers contained in a carbon fiber-reinforced plastic 3 mm or more, it is of course done to make the number average fiber length of carbon fibers in cut pieces of a woven fabric 3 mm or more, only such a condition is insufficient, and it is important to prevent breakage of carbon fibers in the step for impregnating a matrix resin to obtain a carbon fiber-reinforced plastic and in the step for molding a carbon fiber-reinforced plastic by press molding. For example, in the case where a thermoplastic resin is impregnated as a matrix resin, it is important to heat the thermoplastic resin at a temperature of its melting point or higher and to press at a condition where the viscosity is lowered. In the case where the melting of the thermoplastic resin is insufficient, because the pressure applied to carbon fibers becomes non-uniform, carbon fibers applied with a high pressure break and the fiber length of carbon fibers becomes shorter, and such a condition is not preferred. Similarly, in the case where a thermoplastic resin is used as a matrix resin also in molding, it is important to heat the thermoplastic resin at a temperature of its melting point or higher and to press at a condition where the viscosity is lowered. To the contrary, in the case where the above-described number average fiber length of carbon fibers exceeds 50 mm, the flowability of the resin deteriorates and a molded product with a desired shape may not be obtained, or only the resin flows and a portion with a low content of carbon fibers with a low strength may be generated or the flatness of the surface of a molded product may be spoiled, and such a condition is not preferred.

Further, in the present invention, as a carbon fiber base material composed of carbon fibers, an edge material is used. Where, the edge material means, for example, a carbon fiber base material unnecessary for a preform, etc. which is a residual after cutting a carbon fiber base material in order to make a preform, etc. Because such an edge material has been already cut to some extent, the cutting step before carding may be relatively diminished. Further, because there is no effective method for utilizing an edge material of a carbon fiber base material and it is frequently scrapped, it can be obtained inexpensively and use thereof is preferable also from the viewpoint of effective application of resources. A process flow of the method for producing a carbon fiber aggregate and a carbon fiber-reinforced plastic according to the present invention is shown in Fig. 2 at a simplified state.

In Fig. 2, although a process for producing a usual carbon fiber-reinforced plastic (a molded product) is also shown, a process flow part A surrounded by a dashed line exemplifies a process flow of a method for producing a carbon fiber aggregate and a carbon fiber-reinforced plastic according to the present invention by using an edge material of a carbon fiber woven fabric. However, "punching", mentioned as part of the fourth step does not form part of the invention.

Examples

Hereinafter, the present invention will be explained more concretely by raising examples. Method for determining the respective properties used in these examples are as follows.

(Number average fiber length of carbon fibers in carbon fiber aggregate)

In the case where a carbon fiber aggregate was a web or a nonwoven fabric, it was cut at a size of 30 cm square, in the case where a carbon fiber aggregate was a sliver, it was cut at a length of 30 cm, and in this case, the cut thereof was heated in an electric furnace heated at 500 °C for one hour and organic substances were burnt off. 400 carbon fibers were randomly taken out from the residual carbon fibers and the fiber lengths thereof were determined, and using the values thereof, the number average fiber length of carbon fibers was determined.

(Number average fiber length of carbon fibers in cut piece)

A cut piece was decomposed using a pincette until it became carbon fiber bundles. Where, in the case where a carbon fiber woven fabric is hard to be decomposed by welding or stitching, after it was heated in an electric furnace heated at 500 °C for one hour and organic substances were burnt off, the residual was decomposed using a pincette until it became carbon fiber bundles. 400 carbon fibers were randomly taken out from the obtained carbon fiber bundles and the fiber lengths thereof were determined, and using the values thereof, the number average fiber length of carbon fibers was determined.

(Number average fiber length of carbon fibers in carbon fiber-reinforced plastic)

A sample of about 5g was cut out from a molded product (a carbon fiber-reinforced plastic), after it was heated in an electric furnace heated at 500 °C for one hour and organic substances such as a matrix resin were burnt off, the residual carbon fibers were dispersed in water while being careful so as not to be broken, and the dispersed aqueous solution was filtrated by a filter paper. Using a digital microscope having an image analysis function, 400 carbon fibers were randomly extracted from the carbon fibers left on the filter paper and the fiber lengths thereof were determined, and using the values thereof, the number average fiber length was determined.

(Flexural strength of carbon fiber-reinforced plastic)

Based on ISO178 method (1993), the flexural strength was determined at a condition of n=5.

(Percentage content of carbon fibers in carbon fiber-reinforced plastic)

A sample of about 2g was cut out from a molded product of a carbon fiber-reinforced plastic, and the mass thereof was determined. Thereafter, it was heated in an electric furnace heated at 500 °C for one hour and organic substances such as a matrix resin were burnt off. After being cooled down to a room temperature, the mass of the residual carbon fibers was determined. The rate of the mass of the carbon fibers to the mass of the sample before being burnt off with organic substances such as a matrix resin was determined, and it was defined as the percentage content of carbon fibers.

Example 1:

After a plain weave woven fabric ("C06343", produced by Toray Industries, Inc.) made by using carbon fibers ("T300", produced by Toray Industries, Inc., density: 1.76 g/cm$^3$, diameter: 7 $\mu$m, number of filaments: 3000) was cut into cut pieces each at a size of 5 cm square, the cut pieces were fed into an opening machine to decompose the woven fabric, whereby a mixture of carbon fiber bundles and refined carbon fibers was obtained. The number average fiber length of carbon fibers in the cut piece was 48 mm. This mixture was fed again into the opening machine, and cotton-like carbon fibers, in which carbon fiber bundles almost do not exist, were obtained. The cotton-like carbon fibers and nylon 6 discontinuous fibers (single fiber fineness: 1.7 dtex, cut length: 51 mm, number of crimps: 12 crests/25 mm, rate of crimp: 15%) were mixed at a mass ratio of 50:50. This mixture was fed again into the opening machine, and a mixture raw cotton composed of carbon fibers and nylon 6 fibers was obtained.

This mixture raw cotton was fed into a carding machine having a structure as shown in Fig. 1 which has a cylinder roll with a diameter of 600 mm to form a sheet-like web composed of carbon fibers and nylon 6 fibers.

Then, the web was drawn while being narrowed in width to obtain a sliver. At that time, the rotational speed of the cylinder roll was 350 rpm, and the speed of the doffer was 15 m/min. In the obtained sliver, the number average fiber length of carbon fibers was 31 mm. In this carding step, falling off and winding onto the rolls of the carding machine of carbon fibers did not occur.

After this, the sliver was drawn while being twisted and further heated continuously by an infrared heater to melt nylon 6 fibers, it was cooled and solidified, and it was cut at a length of 10 mm to obtain a material for injection molding. This material for injection molding and a nylon 6 resin ("CM1001" produced by Toray Industries, Inc.) were mixed so that the mass ratio of carbon fibers to nylon 6 (including nylon 6 fibers) becomes 20:80 and the mixture was injection molded, thereby obtaining a flat plate-like molded product of a carbon fiber-reinforced plastic. The number average fiber length of carbon fibers in the obtained molded product was 0.9 mm. Further, when the flexural strength of the obtained flat plate was measured, it was 350 MPa.

Example 2:

A sliver was obtained in a manner similar to that in Example 1, other than a condition where the same carbon fiber woven fabric as that used in Example 1 was cut at a size of 1 cm square. The number average fiber length of carbon fibers in the cut piece was 9 mm. Further, in the obtained sliver, the number average fiber length of carbon fibers was 6 mm. In this carding step, although falling off of carbon fibers was observed, winding of carbon fibers onto the rolls of the carding machine did not occur.

Using the obtained sliver, a flat plate-like molded product of a carbon fiber-reinforced plastic was obtained in a manner similar to that in Example 1. The number average fiber length of carbon fibers in the obtained molded product was 0.6 mm. Further, when the flexural strength of the obtained flat plate was measured, it was 310 MPa.

Example 3:

A sliver was obtained in a manner similar to that in Example 1, other than a condition where the same carbon fiber woven fabric as that used in Example 1 was cut at a size of 20 cm square. The number average fiber length of carbon fibers in the cut piece was 18 mm. Further, in the obtained sliver, the number average fiber length of carbon fibers was 31 mm. In this carding step, falling off of carbon fibers which became shorter by being cut at the carding step and winding of carbon fibers partially onto the rolls of the carding machine were observed.

Using the obtained sliver, a flat plate-like molded product of a carbon fiber-reinforced plastic was obtained in a manner similar to that in Example 1. The number average fiber length of carbon fibers in the obtained molded product was 0.7 mm. Further, when the flexural strength of the obtained flat plate was measured, it was 330 MPa.

Comparative Example 1:

The same carbon fiber woven fabric as that used in Example 1 was used and it was cut to form cut pieces, and after they were kneaded with a nylon 6 resin ("CM1001", produced by Toray Industries, Inc.) by a twin-screw extruder so that the mass ratio of carbon fibers to nylon 6 became 50:50, the mixture was extruded in a gut-like form, and it was cooled by water and cut to make pellets for injection molding. Where, because the cut carbon fiber woven fabric could not be stably fed into the twin-screw extruder if they were large, the carbon fiber woven fabric was fed into the twin-screw extruder after it was cut at a size of 1 cm square. The number average fiber length of carbon fibers in the cut piece was 9 mm. The obtained pellets for injection molding were injection molded in a manner similar to that in Example 1 to obtain a flat plate-like molded product of a carbon fiber-reinforced plastic. The number average fiber length of carbon fibers in the obtained molded product was 0.1 mm. Further, when the flexural strength of the obtained flat plate was measured, it was 210 MPa.

Example 4:

A web was made in a manner similar to that in Example 1 until a sheet-like web was made. The number average fiber length of carbon fibers in the web was 36 mm. The variation in areal weight (CV value) of carbon fibers in the web which was a carbon fiber aggregate was 6%, and the variation in thickness (CV Value) was 7%. Further, the critical shear deformation angle of the carbon fiber aggregate did not indicate a local maximum value within a range up to 30 degrees, and it exceeded 30 degrees.

The webs were laminated in a same direction, and further, nylon 6 films were laminated so that the mass ratio of carbon fibers to nylon 6 (including nylon 6 fibers) became 30:70. The laminate of the webs and nylon 6 films was nipped with polyimide films and further nipped with aluminum plates, and pressed at 250 °C for three minutes while being pressed by a pressing machine at a pressure of 5 MPa, and thereafter, it was cooled down to 40 °C to obtain a flat plate-like molded product of a carbon fiber-reinforced plastic. The number average fiber length of carbon fibers in the obtained molded product was 28 mm. Further, when the flexural strength of the obtained flat plate was measured, it was 410 MPa. Further, in the CFRP voids were not formed, and the appearance was excellent.

Example 5:

Using carbon fiber bundles each composed of 12000 single fibers of carbon fibers ("T700S", produced by Toray Industries, Inc., density: 1.8, diameter: 7 μm) as reinforcing fibers and polyester yarns ("Tetron", produced by Toray Industries, Inc., number of filaments: 24, total fineness: 56 tex) as stitch yarns, the carbon fiber bundles were arranged and laminated so as to form a structure of -45 degrees/90 degrees/ +45 degrees/0 degree/+45 degrees/90 degrees/-45 degrees, and they were integrated by stitch yarns to make a multiaxial stitch base material. Here, the carbon fiber bundles were arranged in the respective layers so that the arrangement density of carbon fiber bundles became 3.75/cm and the areal weight of carbon fiber bundles became 300 g/$m^2$ per two layers, and the arrangement interval of stitch yarns was set at 5 mm and the pitch of stitch was set at 5 mm. The rate of stitch yarns existing in the obtained multiaxial stitch base material was 2 wt.%. An edge material after making a preform for RTM using this multiaxial stitch base material was recycled, and it was placed on a table of an automatic cutting machine having a ultrasonic cutter capable of moving on the table in X and Y directions. Thereafter, while moving the ultrasonic cutter in X direction and Y direction at an interval of 8 cm, the edge material of the multiaxial stitch base material was cut to make cut pieces. The number average fiber length of carbon fibers contained in the cut pieces was 42 mm. A web was made in a manner similar to that in Example 4 other than a condition where cut pieces were changed to those obtained as above and carbon fibers and nylon 6 discontinuous fibers were mixed at a mass ratio of 80:20. In this Example, by using not a carbon fiber base material itself but an edge material thereof, the cut pieces could be obtained more efficiently and in a shorter time than those in Example 4. The number average fiber length of carbon fibers in the web was 40 mm. The variation in areal weight of carbon fibers in the web which was a carbon fiber aggregate was 8%, and the variation in thickness was 8%. Further, the critical shear deformation angle of the carbon fiber aggregate did not indicate a local maximum value within a range up to 30 degrees, and it exceeded 30 degrees.

The obtained webs were laminated in a same direction, and further, a film composed of PPS ("Torcon", produced by Toray Industries, Inc.) was laminated so that the mass ratio of carbon fibers : PPS became 30:80. The laminate of the web and PPS film was nipped with polyimide films and further nipped with aluminum plates, and pressed at 340 °C for three minutes while being pressed by a pressing machine at a pressure of 5 MPa, and thereafter, it was cooled down to 40 °C to obtain a flat plate-like molded product of a carbon fiber-reinforced plastic. The number average fiber length of carbon fibers in the obtained molded product was 21 mm. Further, when the flexural strength of the obtained flat plate was measured, it was 340 MPa.

Example 6:

A web was made in a manner similar to that in Example 5 other than a condition where cut pieces were made by cutting an edge material of the multiaxial stitch base material after making a preform for RTM, by using a Thomson cutter mold for punching the edge material at a size of 8 cm square. In this Example, by using a Thomson cutter mold, the cutting of the edge material could be performed more efficiently and in a shorter time than those in Example 5. Where, the number average fiber length of carbon fibers contained in the cut pieces, the number average fiber length of carbon fibers in the web, the variation in areal weight and the variation in thickness of carbon fibers in the web, and the critical shear deformation angle were the same as those in Example 5.

Example 7: Reference example only

A web was made in a manner similar to that in Example 4 other than a condition where as a same carbon fiber woven fabric as that used in Example 1, a carbon fiber woven fabric with a binder, which was prepared by applying binder particles (low melting-point quaternary copolymerized nylon particles) at 5 g/$m^2$ and welding the particles, was used for making a preform for RTM, an edge material after making the preform was recycled, the recycled edge material was cut using a Thomson cutter mold, and instead of nylon 6 discontinuous fibers, recycled glass fibers (number average fiber length: 10 cm) were mixed at a rate in mass ration of carbon fibers 70: recycled glass fibers 30. After the webs were laminated in the same direction, the laminate was needle punched to obtain a nonwoven fabric (100 g/$m^2$). The number average fiber length of carbon fibers in the cut pieces was 32 mm. Further, the number average fiber length of carbon fibers in the obtained nonwoven fabric was 27 mm. In the carding, in spite of using the carbon fiber woven fabric with a binder which was hard to be loosened, winding of fibers onto rolls of a carding machine did not occur, and the process passing property was good.

The variation in areal weight of carbon fibers in the carbon fiber aggregate was 7%, and the variation in thickness was 9%. Further, the critical shear deformation angle of the carbon fiber aggregate did not indicate a local maximum value within a range up to 30 degrees, and it exceeded 30 degrees.

A laminate was prepared by laminating the obtained webs and the above-described carbon fiber woven fabrics with a binder so that the webs became a core at a schematic sandwich form having a laminated structure of 2 layers of the carbon fiber woven fabrics/4 layers of the webs/2 layers of the carbon fiber woven fabrics, and by resin transfer molding (RTM), a flat plate-like molded product of a carbon fiber-reinforced plastic was obtained. Concretely, the above-described laminate was placed in a cavity of a flat plate-like mold comprising a male mold and a female mold, after closing the mold with sealing condition, the cavity was vacuum evacuated from a vacuum evacuation port so that the pressure in the cavity became a pressure of 0.08 to 0.1 MPa, and an epoxy resin, which was a matrix resin, was infused at a pressurized condition from a resin inlet port. After a predetermined time passed, the vacuum evacuation was stopped to stop the infusion of the matrix resin, and after one hour passed, took out to obtain a flat plate-like molded product of a carbon fiber-reinforced plastic. Where, the mold was heated at 110 °C in advance before the infusion of the matrix resin, and by keeping the same temperature after the injection of the resin, the matrix resin was cured. Here, as the epoxy resin, "TR-C32" produced by Toray Industries, Inc. was used.

The number average fiber length of carbon fibers in the obtained molded product was 27 mm, and the content in weight of carbon fibers Wf in the molded product was 55 wt.%. Further, when the flexural strength of the obtained flat plate, it was 635 MPa. In RTM, because the variations in areal weight and in thickness (CV values) of the nonwoven fabric could be set to be low, in the resin impregnation, an unstable flow was not observed and a uniform resin flow was performed, and voids were not formed and a molded product excellent in appearance was obtained.

Industrial Applications of the Invention

The present invention can be applied to production of any carbon fiber aggregate and any carbon fiber-reinforced plastic desired with recycle of cut pieces of a carbon fiber base material.

Explanation of symbols

1: carding machine
2: cylinder roll
3: take-in roll
4: doffer roll
5: worker roll
6: stripper roll
7: feed roll
8: belt conveyer
9: cut piece
10: web

## Claims

1. A method for producing a carbon fiber aggregate **characterized in that** an edge material of a carbon fiber base material composed of carbon fibers is cut to obtain a cut piece (9), and said cut piece (9) is fed into an opening machine to decompose, whereby a mixture of carbon fiber bundles and refined carbon fibers is obtained, the mixture is again fed again into the opening machine to obtain cotton-like carbon fibers in which carbon fiber bundles almost do not exist, and the cotton-like carbon fibers are mixed with thermoplastic resin fibers or glass fibers and this mixture is fed again into the opening machine to obtain a mixture of raw cotton-like carbon fibers composed of carbon fibers and thermoplastic resin fibers or glass fibers, and this mixture of raw cotton-like carbon fibers composed of carbon fibers and thermoplastic resin fibers or glass fibers is fed into a carding machine to form a web (10) and/or made into a nonwoven fabric to obtain a carbon fiber aggregate composed of carbon fibers and thermoplastic resin fibers or glass fibers, and wherein a binder or a tackifier has been applied for said carbon fiber base material.

2. The method for producing a carbon fiber aggregate according to claim 1, wherein means of said making into a web (10) and/or said making into a nonwoven fabric is carding and/or punching, and said carbon fiber aggregate has a form of a web (10) and/or a nonwoven fabric.

3. The method for producing a carbon fiber aggregate according to claim 1 or 2, wherein a variation (a CV value) in areal weight of carbon fibers in said carbon fiber aggregate is less than 10%.

4. The method for producing a carbon fiber aggregate according to any of claims 1 to 3, wherein a critical shear deformation angle of said carbon fiber aggregate is 30 degrees or more.

5. The method for producing a carbon fiber aggregate according to any of claims 1 to 4, wherein said thermoplastic resin fibers or said glass fibers are recycled ones.

6. A method for producing a carbon fiber-reinforced plastic wherein a matrix resin is impregnated into a carbon fiber aggregate produced by a production method according to any of claims 1 to 5.

7. The method for producing a carbon fiber-reinforced plastic according to claim 6, wherein said matrix resin is a precursor of a thermosetting resin or a thermoplastic resin, and said matrix resin is impregnated by an infusion molding, such as a resin transfer molding (RTM), vacuum-assisted resin transfer molding (VaRTM) or reaction injection molding (RIM).

8. The method for producing a carbon fiber-reinforced plastic according to claim 6 or 7, wherein in said the infusion molding, said matrix resin is impregnated into a laminate laminated with said carbon fiber aggregate and a carbon fiber base material different from said carbon fiber aggregate in a sandwich form so that said carbon fiber aggregate becomes a core of the sandwich.

9. The method for producing a carbon fiber-reinforced plastic according to claim 6, wherein said matrix resin is a thermoplastic resin, and after said matrix resin is impregnated into said carbon fiber aggregate, they are injection molded.

10. The method for producing a carbon fiber-reinforced plastic according to claim 6, wherein said matrix resin is a thermosetting resin or a thermoplastic resin, and after said matrix resin is impregnated into said carbon fiber aggregate, they are press molded.

11. The method for producing a carbon fiber-reinforced plastic according to claim 6, wherein said matrix resin is a thermosetting resin or a thermoplastic resin, and said matrix resin is impregnated by press molding.

12. The method for producing a carbon fiber-reinforced plastic according to claim 10 or 11, wherein in said press molding, said matrix resin is impregnated into a laminate laminated with said carbon fiber aggregate and a carbon fiber base material different from said carbon fiber aggregate in a schematic sandwich form so that said carbon fiber aggregate becomes a core of the sandwich.

**Patentansprüche**

1. Verfahren zur Herstellung eines Kohlenstofffaser-Aggregats, **dadurch gekennzeichnet, dass** ein Kantenmaterial eines Kohlenstofffaser-Basismaterials, welches aus Kohlenstofffasern zusammengesetzt ist, geschnitten wird, um ein geschnittenes Teil (9) zu erhalten, und das geschnittene Teil (9) in eine Öffnungsmaschine zum Spalten gegeben wird, wodurch eine Mischung von Kohlenstofffaser-Bündeln und verfeinerten Kohlenstofffasern erhalten wird, wobei die Mischung erneut in die Öffnungsmaschine gegeben wird, um baumwollartige Kohlenstofffasern zu erhalten, in welchen Kohlenstofffaserbündel nahezu nicht vorhanden sind, und wobei die baumwollartigen Kohlenstofffasern mit thermoplastischen Harzfasern oder Glasfasern gemischt werden, und diese Mischung erneut in die Öffnungsmaschine gegeben wird, um eine Mischung von rohbaumwollartigen Kohlenstofffasern, welche aus Kohlenstofffasern und thermoplastischen Harzfasern oder Glasfasern zusammengesetzt sind, zu erhalten, und die Mischung aus roh-kohlenstoffartigen Fasern, welche aus Kohlenstoffasern und thermoplastischen Harzfasern oder Glasfasern zusammengesetzt ist, in eine Kardiermaschine gegeben wird, um ein Netz (10) zu bilden und/oder in einen nichtgewobenen Stoff umgesetzt werden, um ein Kohlenstofffaser-Aggregat, welches sich aus Kohlenstofffasern und thermoplastischen Harzfasern oder Glasfasern zusammensetzt, zu erhalten, und wobei ein Bindemittel oder ein Klebrigmacher auf das Kohlenstofffaser-Basismaterial aufgetragen wurde.

2. Verfahren zur Herstellung eines Kohlenstofffaser-Aggregats nach Anspruch 1, wobei Mittel zum Herstellen eines Netzes (10) und/oder zum Herstellen eines nichtgewobenen Stoffes Kardieren und/oder Stanzen sind, und das Kohlenstofffaser-Aggregat eine Form eines Netzes (10) und/oder eines nichtgewobenen Stoffes aufweist.

3. Verfahren zum Herstellen eines Kohlenstofffaser-Aggregats nach Anspruch 1 oder 2, wobei eine Variation (ein CV-Wert) eines Flächengewichts der Kohlenstofffasern in dem Kohlenstofffaser-Aggregat weniger als 10 % ist.

4. Verfahren zur Herstellung eines Kohlenstofffaser-Aggregats nach einem der Ansprüche 1 bis 3, wobei ein kritischer Scherverformungswinkel des Kohlenstofffaser-Aggregats 30 Grad oder mehr ist.

5. Verfahren zur Herstellung eines Kohlenstofffaser-Aggregats nach einem der Ansprüche 1 bis 4, wobei die thermoplastischen Harzfasern oder Glasfasern Wiederverwendete sind.

6. Verfahren zur Herstellung einer kohlenstofffaserverstärkten Kunststoffes, wobei ein Matrixharz in ein Kohlenstofffaser-Aggregat, welches nach dem Herstellungsverfahren nach einem der Ansprüche 1 bis 5 hergestellt wird, imprägniert wird.

7. Verfahren zur Herstellung eines kohlenstofffaserverstärkten Kunststoffes nach Anspruch 6, wobei das Matrixharz ein Vorläufer eines duroplastischen Harzes oder thermoplastischen Harzes ist, und das Matrixharz über ein Infusionsformen, wie etwa ein Harztransferformen (RTM), ein vakuumunterstütztes Harztransferformen (VaRTM) oder ein Reaktionsinjektionsformen (RIM), imprägniert wird.

8. Verfahren zur Herstellung eines kohlenstofffaserverstärkten Kunststoffes nach Anspruch 6 oder 7, wobei innerhalb des Infusionsformens das Matrixharz in ein Laminat imprägniert wird, welches mit dem Kohlenstofffaser-Aggregat und einem Kohlenstofffaser-Basismaterial, welches sich von dem Kohlenstofffaser-Aggregat unterscheidet, in einer Sandwich-Form angeordnet ist, sodass das Kohlenstofffaser-Aggregat der Kern des Sandwiches wird.

9. Verfahren zur Herstellung eines kohlenstofffaserverstärkten Kunststoffes nach Anspruch 6, wobei das Matrixharz ein thermoplastisches Harz ist, und nachdem das Matrixharz in das Kohlenstofffaser-Aggregat imprägniert wurde, diese einem Injektionsformen unterzogen werden.

**10.** Verfahren zur Herstellung eines kohlenstofffaserverstärkten Kunststoffes nach Anspruch 6, wobei das Matrixharz ein duroplastisches Harz oder ein thermoplastisches Harz ist, und nachdem das Matrixharz in das Kohlenstofffaser-Aggregat imprägniert wurde, diese einem Pressformen unterzogen werden.

**11.** Verfahren zur Herstellung eines kohlenstofffaserverstärkten Kunststoffes nach Anspruch 6, wobei das Matrixharz ein duroplastisches oder ein thermoplastisches Harz ist, und das Matrixharz durch Pressformen imprägniert wird.

**12.** Verfahren zum Herstellen eines kohlenstofffaserverstärkten Kunststoffes nach Anspruch 10 oder 11, wobei innerhalb des Pressformens das Matrixharz in ein Laminat imprägniert wird, welches mit dem Kohlenstofffaser-Aggregat und einem Kohlenstofffaser-Basismaterial, welches sich von dem Kohlenstofffaser-Aggregat unterscheidet, in einer schematischen Sandwich-Form laminiert wird, sodass das Kohlenstofffaser-Aggregat der Kern des Sandwiches wird.

**Revendications**

**1.** Procédé de production d'un agrégat de fibres de carbone **caractérisé en ce qu'**un matériau de bord d'un matériau de base en fibres de carbone composé de fibres de carbone est découpé pour obtenir une pièce découpée (9), et ladite pièce découpée (9) est introduite dans une ouvreuse pour se décomposer, moyennant quoi un mélange de faisceaux de fibres de carbone et de fibres de carbone raffinées est obtenu, le mélange est de nouveau introduit dans l'ouvreuse pour obtenir des fibres de carbone ressemblant à du coton dans lesquelles les faisceaux de fibres de carbone n'existent presque pas, et les fibres de carbone ressemblant à du coton sont mélangées avec des fibres de résine thermoplastique ou des fibres de verre et ce mélange est introduit de nouveau dans l'ouvreuse pour obtenir un mélange de fibres de carbone ressemblant à du coton brut composées de fibres de carbone et de fibres de résine thermoplastique ou de fibres de verre, et ce mélange de fibres de carbone ressemblant à du coton brut composées de fibres de carbone et de fibres de résine thermoplastique ou de fibres de verre est introduit dans une carde pour former une toile (10) et/ou transformé en un tissu non tissé pour obtenir un agrégat de fibres de carbone composé de fibres de carbone et de fibres de résine thermoplastique ou de fibres de verre, et où un liant ou un agent collant a été appliqué pour ledit matériau de base en fibres de carbone.

**2.** Procédé de production d'un agrégat de fibres de carbone selon la revendication 1, dans lequel le moyen de ladite transformation en une toile (10) et/ou de ladite transformation en un tissu non tissé est un cardage et/ou un aiguilletage, et ledit agrégat de fibres de carbone a une forme d'une toile (10) et ou d'un tissu non tissé.

**3.** Procédé de production d'un agrégat de fibres de carbone selon la revendication 1 ou 2, dans lequel une variation (une valeur CV) du poids surfacique des fibres de carbone dans ledit agrégat de fibres de carbone est inférieure à 10%.

**4.** Procédé de production d'un agrégat de fibres de carbone selon l'une des revendications 1 à 3, dans lequel un angle de déformation par cisaillement critique dudit agrégat de fibre de carbone est supérieur ou égal à 30 degrés.

**5.** Procédé de production d'un agrégat de fibres de carbone selon l'une des revendications 1 à 4, dans lequel lesdites fibres de résine thermoplastique ou lesdites fibres de verre sont des fibres recyclées.

**6.** Procédé de production d'un plastique renforcé de fibres de carbone, dans lequel une résine matricielle est imprégnée dans un agrégat de fibres de carbone produit par un procédé de production selon l'une des revendications 1 à 5.

**7.** Procédé de production d'un plastique renforcé de fibres de carbone selon la revendication 6, dans lequel ladite résine matricielle est un précurseur d'une résine thermodurcissable ou d'une résine thermoplastique, et ladite résine matricielle est imprégnée par un moulage par infusion, tel qu'un moulage par transfert de résine (RTM), un moulage par transfert de résine sous vide (VaRTM) ou moulage par injection et réaction (RIM).

**8.** Procédé de production d'un plastique renforcé de fibres de carbone selon la revendication 6 ou 7, dans lequel dans ledit moulage par infusion, ladite résine matricielle est imprégnée dans un stratifié qui est stratifié avec ledit agrégat de fibres de carbone et un matériau de base en fibres de carbone différent dudit agrégat de fibres de carbone sous forme de sandwich de sorte que ledit agrégat de fibres de carbone devienne un noyau du sandwich.

**9.** Procédé de production d'un plastique renforcé de fibres de carbone selon la revendication 6, dans lequel ladite résine matricielle est une résine thermoplastique et, après imprégnation de ladite résine matricielle dans ledit agrégat de fibres de carbone, ils sont moulés par injection.

**10.** Procédé de production d'un plastique renforcé de fibres de carbone selon la revendication 6, dans lequel ladite résine matricielle est une résine thermodurcissable ou une résine thermoplastique, et après imprégnation de ladite résine matricielle dans ledit agrégat de fibres de carbone, ils sont moulés à la presse.

**11.** Procédé de production d'un plastique renforcé de fibres de carbone selon la revendication 6, dans lequel ladite résine matricielle est une résine thermodurcissable ou une résine thermoplastique, et ladite résine matricielle est imprégnée par moulage à la presse.

**12.** Procédé de production d'un plastique renforcé de fibres de carbone selon la revendication 10 ou 11, dans lequel, dans ledit moulage à la presse, ladite résine matricielle est imprégnée dans un stratifié qui est stratifié avec ledit agrégat de fibres de carbone et un matériau de base en fibres de carbone différent dudit agrégat de fibres de carbone sous forme de sandwich schématique de sorte que ledit agrégat de fibres de carbone devienne un noyau du sandwich.

FIG. 1

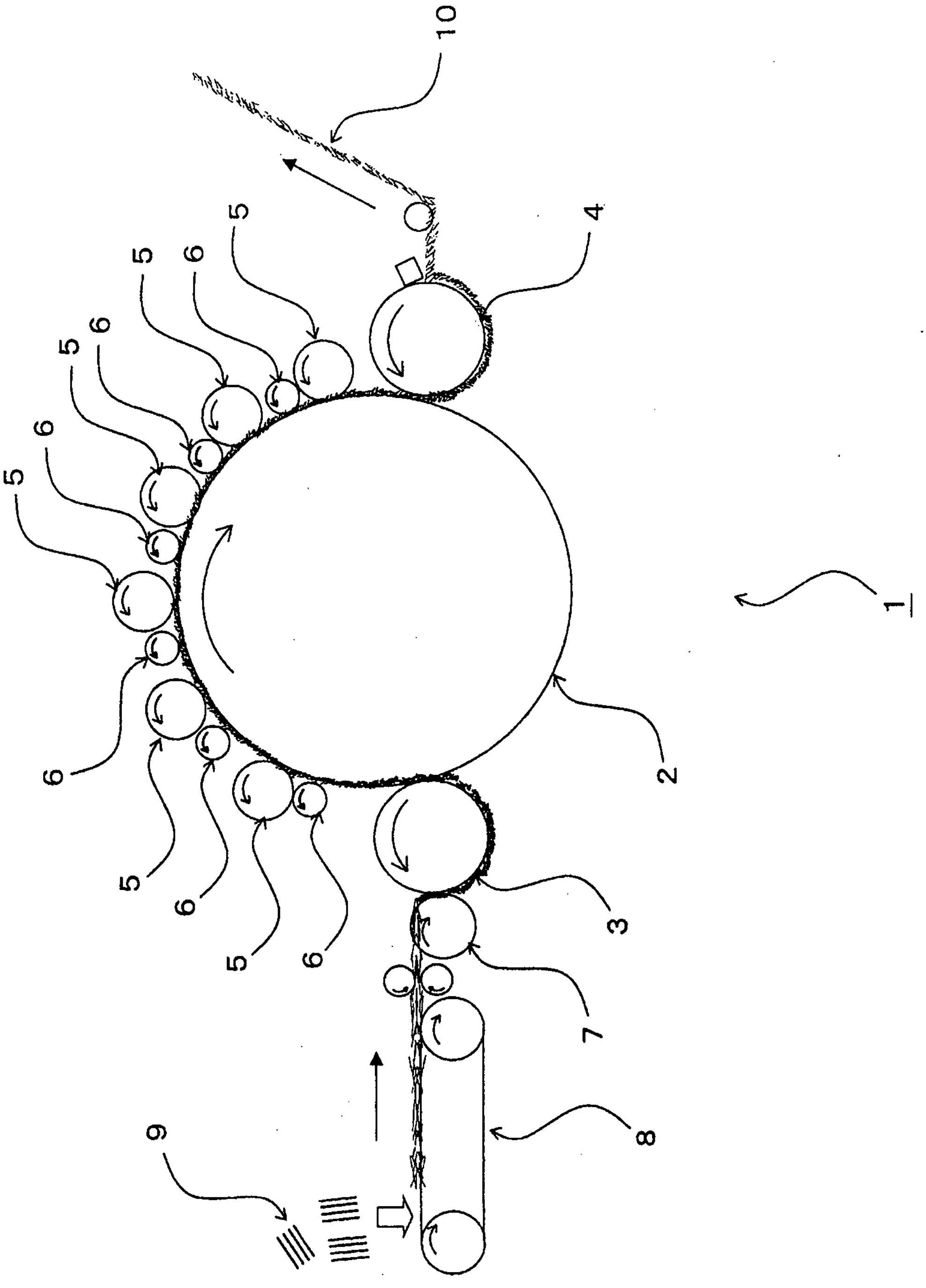

FIG. 2

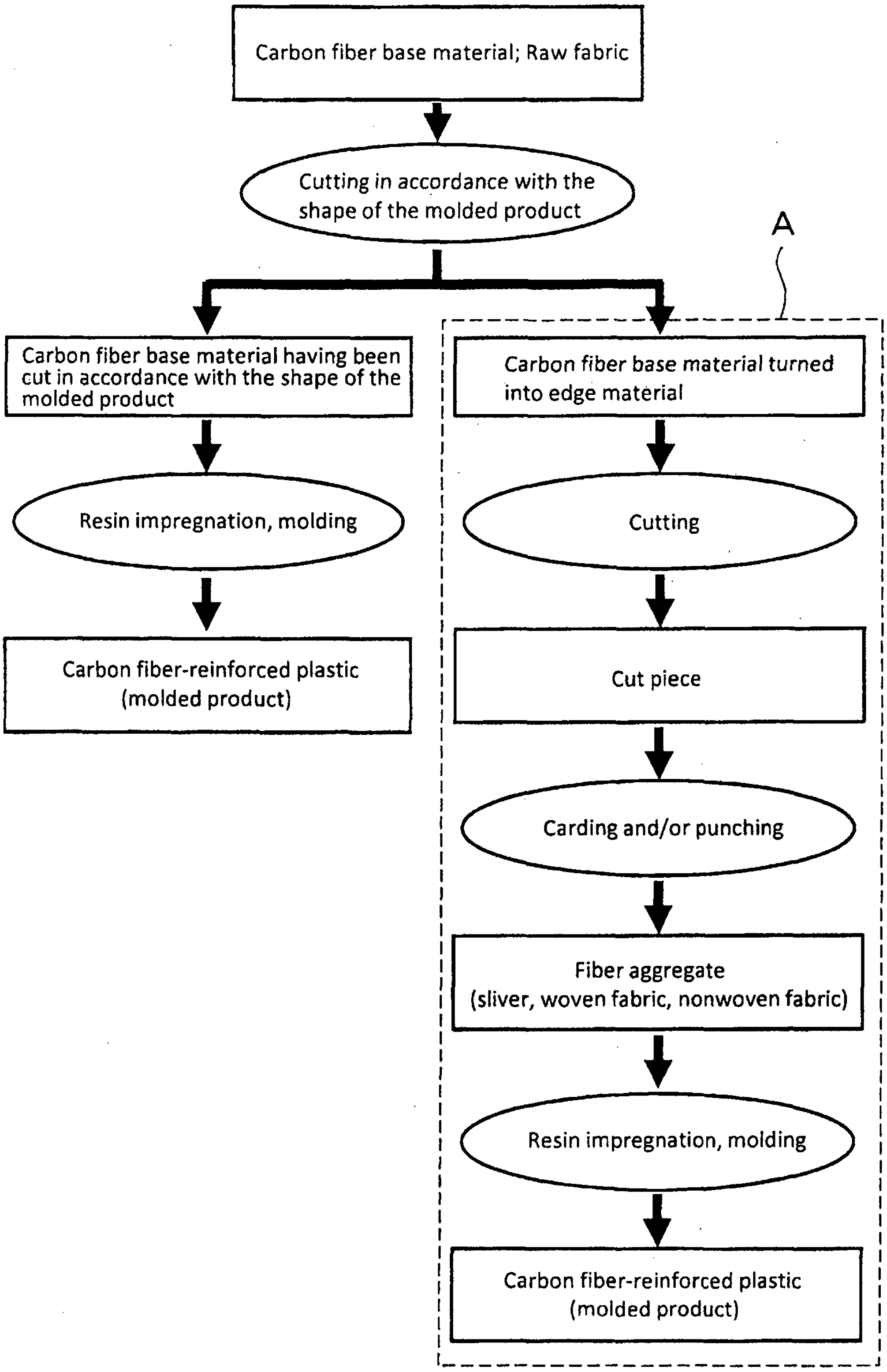
Carbon fiber base material; Raw fabric
Cutting in accordance with the shape of the molded product
A
Carbon fiber base material having been cut in accordance with the shape of the molded product
Resin impregnation, molding
Carbon fiber-reinforced plastic (molded product)
Carbon fiber base material turned into edge material
Cutting
Cut piece
Carding and/or punching
Fiber aggregate (sliver, woven fabric, nonwoven fabric)
Resin impregnation, molding
Carbon fiber-reinforced plastic (molded product)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- JP 2005105491 A
- JP 2009066885 A
- JP 6288084 A
- JP 2006218793 A
- JP 2009138143 A
- GB 2012671 A
- JP 2007162185 A
- JP 2003268669 A
- JP 2001164441 A
- JP 8337960 A